# EUROPEAN PATENT APPLICATION

(11) **EP 1 340 651 A2**
(43) Date of publication of application: **03.09.2003**
(21) Application number: 03251243.6
(22) Date of filing: 28.02.2003
(51) Int. Cl.: B60Q 1/14

(54) **Combination switch**

(30) Priority: 28.02.2002 JP 2002054573
(71) Applicant: Yazaki Corporation, Minato-ku, Tokyo (JP)
(72) Inventor: Mizuno, Yoshiyuki c/o Yasaki Parts Co.,Ltd., Haibara-gun, Shizuoka (JP)
(74) Representative: Haley, Stephen

(57) **Abstract**

A combination switch (1) includes, a switch body (2), supported on a steering shaft (5) of a vehicle, a switch mechanism portion (3), provided on the switch body (2), and a lever member (4), connected to the switch mechanism portion (3) so as to operate the switch mechanism portion (3), and projected in a direction of a width of the vehicle. The switch mechanism portion (3) and the lever member (4) are located on the switch body (2), and are mounted in a direction perpendicular to a direction in which the steering shaft (5) is extended.

## Description

This invention relates to a combination switch used in a vehicle.

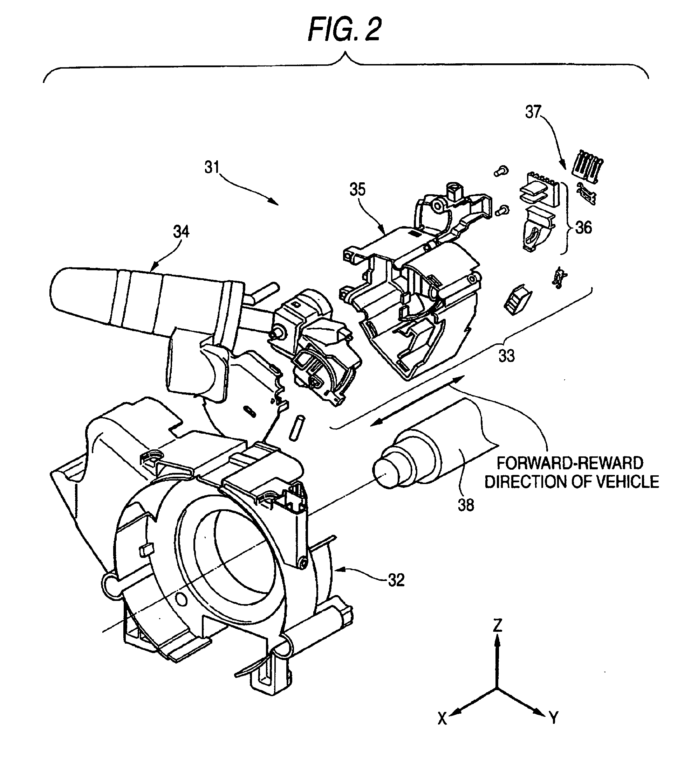

As shown in Fig. 2, usually, a combination switch 31 for a vehicle includes, as main component parts, a switch body 32 supported on a steering of the vehicle, switch mechanism portions 33 provided on the switch body 32, and levers 34 which are connected respectively to the switch mechanism portions 33, and project in a direction of a width of the vehicle (i.e., a direction Y when viewed in a three-dimensional manner). The switch mechanism portion 33 includes a switch casing 35, and fixed contacts 36 and moving contacts 37 which are mounted in the switch casing 35, and are arranged along a forward-rearward direction of the vehicle.

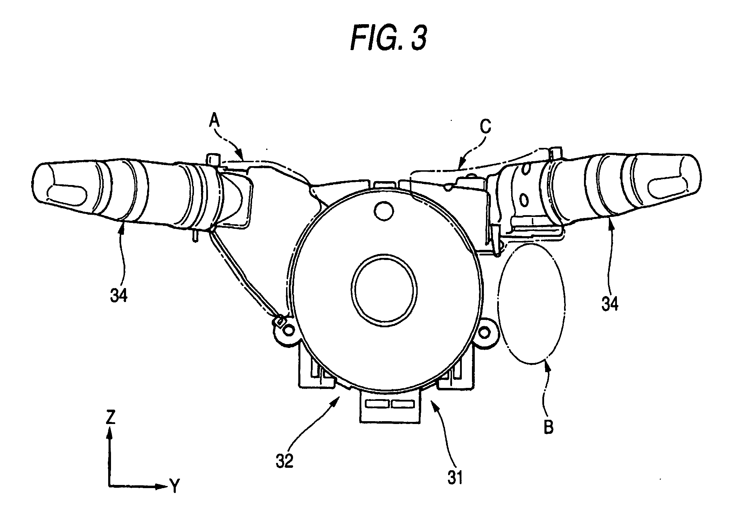

In the above combination switch 31, switches are opened and closed by operating the levers 34, and generally the switch mechanism portions 33, corresponding respectively to the levers 34, are located respectively at those areas (i.e., opposite sides of a steering shaft 38) around the steering shaft 38 (extending generally horizontally along the forward-rearward direction of the vehicle (i.e., along a direction X when viewed in a three-dimensional manner)) which are disposed near respectively to proximal end portions of the levers, these mounting areas being indicated by arrows A (the only area A at the left side of both areas A is shown) in Fig. 3.

In this case, the direction of assembling of the component parts of the switch mechanism portion 33 is set to the forward-rearward direction of the vehicle (i.e., the direction X when viewed in a three-dimensional manner) as shown in Fig. 2, and these component parts are arranged generally along the steering shaft 38.

Currently, however, there are occasions when a steering-vicinity part, such as a key cylinder, is located at the area, indicated by arrow B in Fig. 3, because of a requirement such as a safety requirement. In this case, that portion, indicated by arrow A in Fig. 3 (particularly that portion provided at the area indicated by arrow B) is extremely shifted upwardly in the upward-downward direction of the vehicle (i.e., a direction Z when viewed in a three-dimensional manner). Therefore, the switch mechanism portions 33 is located at the area indicated by arrow C in Fig. 3. However, when the current switch mechanism portion is to be located at this area, a mounting space is insufficient, and therefore it can not be mounted.

It is therefore an object of the present invention to provide a combination switch, in which a space can be provided at a lower side of a lever member which is connected to a switch mechanism portion so as to operate the same.

In order to achieve the above object, according to the present invention, there is provided a combination switch comprising:
a switch body, supported on a steering shaft of a vehicle;
a switch mechanism portion, provided on the switch body; and
a lever member, provided on the switch mechanism portion, and connected to the switch mechanism portion so as to operate the switch mechanism portion, characterized in that
the switch mechanism portion and the lever member are mounted in a direction perpendicular to a direction in which the steering shaft is extended.

Preferably, the switch mechanism portion and the lever member are located on an upper side of the switch body with respect to an upward-downward direction of the vehicle, and are mounted along the upward-downward direction of the vehicle.

In the above configuration, a space can be secured at the lower side of the lever member. Therefore, the steering-vicinity part, such as a key cylinder, can be located at the lower side of the lever member, and besides the ability of protecting the driver's knee is enhanced since the wide space is provided at the lower side of the lever member.

Preferably, the switch mechanism portion includes a switch casing, and a fixed contact and a moving contact which are mounted in the switch casing, and are arranged along the upward-downward direction of the vehicle, and the lever member includes a lever body, a movable shaft provided at one end of the lever body, and an operating portion provided at the other end of the lever body.

In the above configuration, the sufficient space can be secured at the lower side of the lever member. Therefore, the steering-vicinity part, such as a key cylinder, can be located at the lower side of the lever member, and besides the ability of protecting the driver's knee is enhanced since the wide space is provided at the lower side of the lever member.

In the drawings:-
Fig. 1 is an exploded, perspective view of a combination switch of an embodiment according to the present invention;
Fig. 2 is an exploded, perspective view of a related combination switch; and
Fig. 3 is a front-elevational view of the related combination switch.

A preferred embodiment of the present invention will now be described with reference to the drawings.

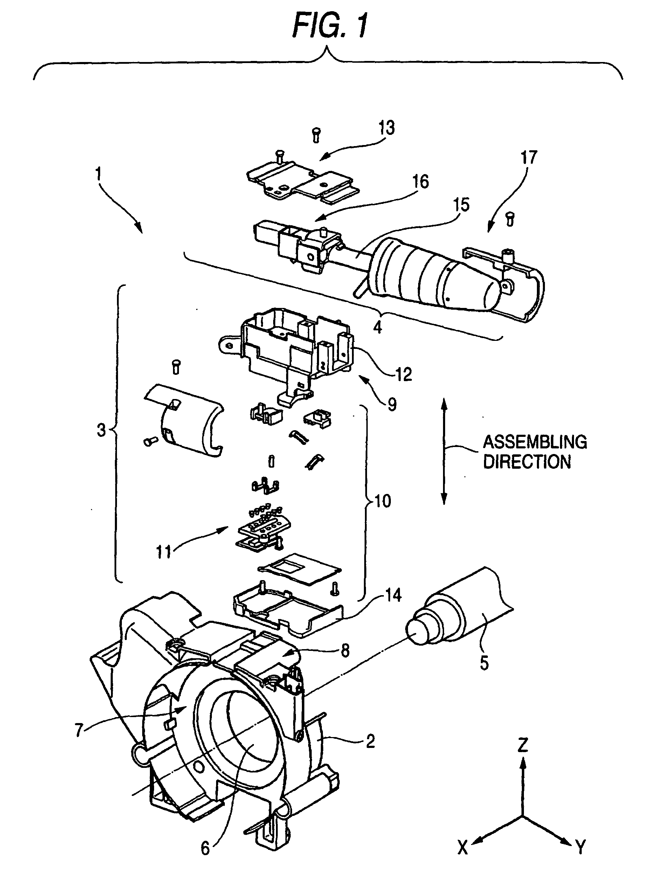

As shown in Fig. 1, the combination switch 1 includes, as main component parts, a switch body 2 supported on a steering of a vehicle, a switch mechanism portion 3 fixedly secured to the switch body 2, and a lever member 4 which is connected to the switch mechanism portion 3, and projects in a direction of a width of the vehicle.

A steering shaft-mounting passage hole 6 is formed through a central portion of the switch body 2, and the switch body 2 is mounted on a steering shaft 5, with the steering shaft 5 passed through this hole 6. A clock spring-mounting portion 7 for the mounting of a clock spring (not shown) thereon is formed on a front side of the switch body 2 with respect to a forward-rearward direction of the vehicle (i.e., a direction X in the drawings). A switch casing-mounting portion 8 for the mounting of a switch casing 9 of the switch mechanism portion 3 thereon is formed on an upper side of the switch body 2 with respect to an upward-downward direction of the vehicle.

The switch mechanism portion 3 includes the switch casing 9, fixed contacts 10 and moving contacts 11 which are mounted in this switch casing 9, and are arranged along the upward-downward direction of the vehicle (i.e., a direction Z in the drawing).

The switch casing 9 includes a casing body 12, in which the fixed contacts 10 and the moving contacts 11 are mounted, and an upper cover 13 and a lower cover 14 which respectively cover upper and lower sides of the casing body 12 with respect to the upward-downward direction of the vehicle.

The lever member 4 includes a lever body 15, a movable shaft 16, which is provided at one end of the lever body 15, and is connected to the switch casing 9 of the switch mechanism portion 3, and an operating portion 17 which is provided at the other end of the lever body 15 so as to operate the switch mechanism portion 3 through the movable shaft 16.

In the above construction, the switch casing 9 is mounted on the switch mounting portion 8 formed on the upper side of the switch body 2 (supported on the steering of the vehicle) with respect to the upward-downward direction of the vehicle, as shown in Fig. 1.

The fixed contacts 10 and the moving contacts 11 are mounted in the casing body 12 of the switch casing 9, and are arranged along the upward-downward direction of the vehicle. This casing body 12 is covered with the upper and lower covers 13 and 14 attached thereto respectively from the upper and lower sides with respect to the upward-downward direction of the vehicle.

The lever member 4 is connected to the switch casing 9 via the movable shaft 16, and projects in the direction of the width of the vehicle.

In this embodiment, the switch mechanism portion 3 and the lever member 4 are located on the upper side of the switch body 2 which is supported on the vehicle steering, above the steering shaft 5. The switch mechanism portion 3 and the lever member 4 are mounted along the upward-downward direction of the vehicle (i.e., the direction Z when viewed in a three-dimensionally manner), and therefore a sufficient space can be secured at the lower side of the lever member 4.

Therefore, a steering-vicinity part, such as a key cylinder, can be located at the lower side of the lever member 4, and besides the ability of protecting the driver's knee is enhanced since the wide space is provided at the lower side of the lever member 4.

In the above embodiment, although the space is secured at the lower side of the right-hand lever, there can be provided a construction in which a space is secured at the lower side of a left-hand lever.

## Claims

1. A combination switch comprising:
a switch body, supported on a steering shaft of a vehicle;
a switch mechanism portion, provided on the switch body; and
a lever member, provided on the switch mechanism portion, and connected to the switch mechanism portion so as to operate the switch mechanism portion,
**characterized in that**
the switch mechanism portion and the lever member are mounted in a direction perpendicular to a direction in which the steering shaft is extended.

2. The combination switch as set forth in claim 1, **characterized in that** the switch mechanism portion and the lever member are located on an upper side of the switch body with respect to an upward-downward direction of the vehicle, and are mounted along the upward-downward direction of the vehicle.

3. The combination switch as set forth in claim 1 or 2, **characterized in that** the switch mechanism portion includes a switch casing, and a fixed contact and a moving contact which are mounted in the switch casing, and are arranged along the upward-downward direction of the vehicle; and
the lever member includes a lever body, a movable shaft provided at one end of the lever body, and an operating portion provided at the other end of the lever body.
